# EUROPEAN PATENT APPLICATION

(11) **EP 3 346 436 A1**
(43) Date of publication of application: **11.07.2018**
(21) Application number: 18150091.9
(22) Date of filing: 02.01.2018
(51) Int. Cl.: G06Q 20/18, G06Q 20/20, G07G 1/00

(54) **RECORDING APPARATUS AND METHOD FOR MAKING CHARACTERS ON CREDIT CARD UNREADABLE**

(30) Priority: 06.01.2017 JP 2017001215
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A recording apparatus includes a detector to detect that a credit card reading device of a settlement apparatus is in an operation state for reading a credit card and an image processor to process image data captured by an image capturing device positioned to capture an image of the settlement apparatus during the reading of the credit card. The image processor is configured to obscure a portion of the image data captured during the reading of the credit card such that characters on the credit card are unreadable when the image is reproduced. The image data captured during operating states other than those for reading the credit card are not obscured by the image processor. A non-volatile storage device is provided to store the image data captured by the image capturing device.

## Description

### FIELD

Embodiments described herein relate generally to a recording apparatus and a method for making characters on a credit card unreadable.

### BACKGROUND

As a countermeasure against an erroneous operation or an unfair operation in a settlement apparatus, such as a POS (point-of-sale) terminal, a camera can be used to record transactions, or portions thereof, in some cases.

However, in a case of a settlement terminal which allows the use of a credit card for transaction settlement, an image of the credit card used for settlement may be captured by the camera. Therefore, there is a risk of information, such as a credit card number on the credit card, might be read in the recorded image by an unauthorized person.

In view of such potential problems, it is desirable to prevent the characters on the credit card from being easily read from the recorded image.

To solve the above-cited problems, a recording apparatus, comprising: a detector configured to detect that a credit card reading device of a settlement apparatus is in an operation state for reading a credit card; an image processor configured to process image data captured by an image capturing device positioned to capture an image of the settlement apparatus during the operation state for reading the credit card, the image processor being configured to obscure a portion of the image data including the image of the settlement apparatus captured during the operation state for reading the credit card such that characters on the credit card are unreadable when the image is reproduced, wherein image data including images of the settlement captured during operating states of the settlement apparatus other than the operating state for reading the credit card are not processed by the image processor to obscure any portion of the image data; and a non-volatile storage device configured to store the image data captured by the image capturing device.

Preferably, the portion of the image data is stored in the non-volatile storage device after the portion has been obscured by the image processor.

Preferably, the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during reproduction of the image data from the non-volatile storage device by reference to the time pointer.

The recording apparatus may further comprise: a user authentication system by which a user may establish authorization to reproduce the image data from the non-volatile storage device.

Preferably, the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during the reproduction of the image data from the non-volatile storage device by reference to the time pointer in the absence of sufficient authorization established by the user authentication system.

Preferably, obscuring the portion comprises reducing resolution of the image data.

Preferably, obscuring the portion comprises replacement of the portion with a filler image.

Preferably, the image capturing device is a camera disposed on the settlement device.

Preferably, the image processor is in the settlement apparatus.

Preferably, the image processor is in a store server connected to the settlement apparatus.

The present invention further relates to a settlement apparatus, comprising: a display screen including a touchscreen by which a user can input a selection of a payment method for settlement of a sales transaction; a credit card reading device by which the user can settle the sales transaction using a credit card; a detector configured to detect that the credit card reading device is in an operation state for reading the credit card; an image capturing device positioned to capture image data of the display screen, the captured image data including an image of the display screen during the operation state for reading the credit card; an image processor configured to process the image data captured by the image capturing device to obscure a portion of the image data including the image captured by the image capturing device during the operation state for reading the credit card such that characters on the credit card are unreadable when the image is reproduced, wherein image data including images captured during operating states other than the operating state for reading the credit card are not processed by the image processor to obscure any portion of the image data; and a non-volatile storage device configured to store the image data captured by the image capturing device.

Preferably, the image capturing device is a camera mounted on the settlement apparatus.

Preferably, the portion of the image data is stored in the non-volatile storage device after the portion has been obscured by the image processor.

Preferably, the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during reproduction of the image data from the non-volatile storage device by reference to the time pointer.

The settlement apparatus may further comprise: a user authentication system by which a user may establish authorization to reproduce the image data from the non-volatile storage device.

Preferably, the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during the reproduction of the image data from the non-volatile storage device by reference to the time pointer in the absence of sufficient authorization established by the user authentication system.

Preferably, obscuring the portion comprises reducing resolution of the image data.

Preferably, obscuring the portion comprises replacement of the portion with a filler image.

The present invention also relates to a method of recording images of a sales transaction settlement process on a settlement apparatus, comprising: obtaining images of a settlement apparatus during a settlement process of a user of the settlement apparatus; detecting whether a credit card reading device of the settlement apparatus has been placed in an operation state for reading a credit card; and using an image processor to obscure a portion of the images of the settlement apparatus during the settlement process corresponding to a time period for which the credit card reading device was detected to be in the operation state for reading the credit card such that characters on the credit card are unreadable when the portion of images of the settlement apparatus is reproduced.

The method may further comprise: storing the portion of the images of the settlement apparatus in a non-volatile storage device after the obscuring using the image processor.

### DESCRIPTION OF THE DRAWINGS

Fig. 1 is a perspective view illustrating the appearance of a checkout apparatus according to an embodiment.
Fig. 2 is a block diagram illustrating a schematic configuration of a checkout system and a checkout apparatus.
Fig. 3 is a flowchart illustrating certain aspects of information processing by a CPU in the checkout system of an embodiment.
Fig. 4 is a diagram schematically illustrating aspects of structure of a data record for a management table.
Fig. 5 is a flowchart illustrating other aspects of information processing by a CPU in the checkout system of an embodiment.
Fig. 6 is a flowchart illustrating other aspects of the information processing by a CPU shown in the checkout system of an embodiment.

### DETAILED DESCRIPTION

In accordance with one embodiment, a recording apparatus includes a detector that is configured to detect that a credit card reading device of a settlement apparatus is in an operation state for reading a credit card and an image processor that is configured to process image data captured by an image capturing device positioned so as to capture an image of the settlement apparatus during the operation state for reading the credit card. The image processor is configured to obscure a portion of the image data including the image of the settlement apparatus that was captured during the operation state for reading the credit card such that characters on the credit card are unreadable when the image is reproduced. The image data including images of the settlement captured during operating states of the settlement apparatus other than the operating state for reading the credit card are not processed by the image processor so as to obscure the image data. A non-volatile storage device is provided for storing the image data captured by the image capturing device.

Hereinafter, example embodiments will be described with reference to the accompanying drawings. In the present disclosure, a checkout system including a self-checkout type apparatus having a function of a settlement apparatus and a storage device is described as one example.

### (First Embodiment)

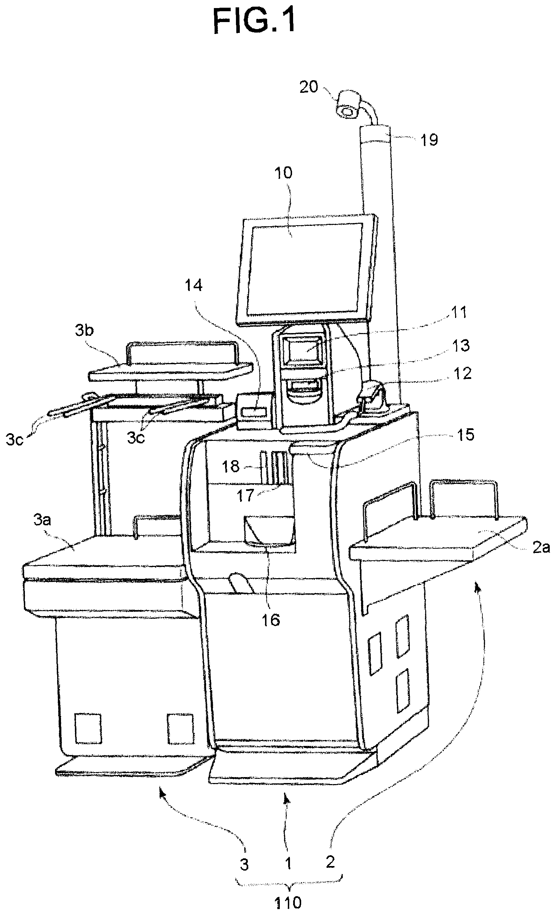

Fig. 1 is a perspective view illustrating the appearance of a checkout apparatus 110 according to an example embodiment. The checkout apparatus 110 is also called a self-checkout type point-of-sale (POS) terminal or a self-registration apparatus.

The checkout apparatus 110 includes a main body 1 and weighing units 2 and 3.

The main body 1 includes a touch panel 10, a scanner window 11, a hand-held scanner 12, a receipt issuing port 13, a card insertion slot 14, a coin depositing tray 15, a change tray 16, a bill insertion port 17, a bill discharge port 18, an alarm lamp 19, and a monitoring camera 20.

The touch panel 10 displays various screens for providing an operator (e.g., a store customer) various information and notifications. The various screens may constitute a GUI (graphical user interface), and the touch panel 10 receives a touch operation (operator input) by operation of the GUI.

The scanner window 11 is formed by covering an opening in the main body 1 with transparent resin or glass. The scanner window 11 enables a commodity held by an operator over the front of the scanner window 11 to be scanned by a fixed scanner arranged inside the main body 1. The fixed scanner is further described later.

The hand-held scanner 12 reads a barcode and outputs barcode information if an operator uses the hand-held scanner 12 by bringing it close to a barcode attached to a commodity that is an item to be purchased.

The receipt issuing port 13 is a slit-like opening for discharging a receipt to the outside of the main body 1.

The card insertion slot 14 is a slit-like opening for inserting a credit card, for transaction settlement, into the inside of the main body 1 and discharging the credit card to the outside of the main body 1.

The coin depositing tray 15 receives a coin inserted by the operator for settlement. An opening is formed on the bottom of the coin depositing tray 15, and the coin enters the inside of the main body 1 through this opening.

The change tray 16 receives coins that are discharged as change from the main body 1.

The bill insertion port 17 is a slit-like opening enabling a bill (paper money) to be inserted by the operator for settlement to enter the inside of the main body 1.

The bill discharge port 18 is a slit-like opening for discharging a bill as change from the main body 1. The bill discharge port 18 holds the discharged bill with a part thereof protruding outside the main body 1.

The alarm lamp 19 performs a lighting operation and a blinking operation for various warning signals.

The monitoring camera 20 overlooks and photographically captures a display surface of the touch panel 10, the hand-held scanner 12, the receipt issuing port 13, the card insertion slot 14, the coin depositing tray 15, the change tray 16, the bill insertion port 17 and the bill discharge port 18 and the like. Either a video camera or a still camera may be used as the monitoring camera 20. In the following description, it is assumed that a video camera is used as the monitoring camera 20. Therefore, the monitoring camera 20 outputs dynamic image data. The monitoring camera 20 has the capability of capturing at least a part of characters displayed on any credit card inserted into the card insertion slot 14 at a resolution at which a readable image might be obtained. The monitoring camera 20 is an example of an image capturing device.

The weighing unit 2 includes a table 2a for placing an unregistered commodity (items which have yet to be scanned or otherwise entered as a part of the sales transaction). The weighing unit 2 measures the total weight of the commodities placed on the table 2a.

The weighing unit 3 includes tables 3a and 3b for placing registered commodities and an arm 3c for hanging bags in which a registered commodity can be placed. The weighing unit 3 measures the total weight of commodities placed on the tables 3a and 3b and in a bag hanging by the arm(s) 3c.

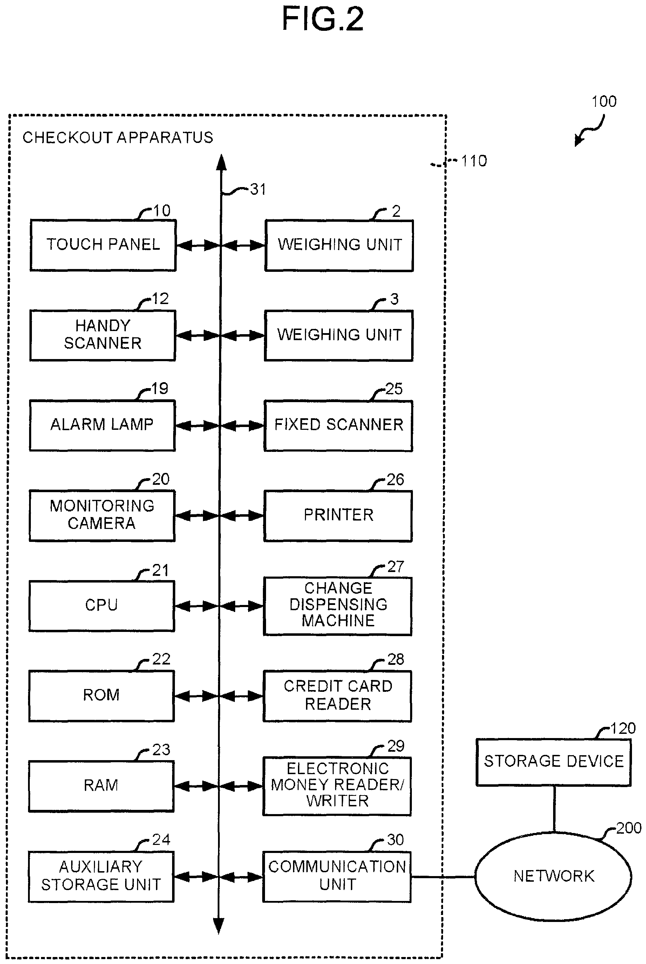

Fig. 2 is a block diagram illustrating a schematic constitution of the checkout system 100 and a checkout apparatus 110. In Fig. 2, the same components as those in Fig. 1 are denoted with the same reference numerals, and a detailed description thereof is omitted.

As shown in Fig. 2, the checkout system 100 is formed by connecting the storage device 120 to the checkout apparatus 110 via a network 200. In the first embodiment, the checkout system 100 provides a function of a recording apparatus.

In addition to the weighing units 2 and 3, the touch panel 10, the hand-held scanner 12, the alarm lamp 19 and the monitoring camera 20, the checkout apparatus 110 further includes a CPU (central processing unit) 21, a ROM (read-only memory) 22, a RAM (random-access memory) 23, an auxiliary storage unit 24, a fixed scanner 25, a printer 26, a change dispensing machine 27, a credit card reader 28, an electronic money reader/writer 29, a communication unit 30 and a communication path 31. These components are accommodated in the main body 1, and are connected via the communication path 31 including a system bus line.

The CPU 21, the ROM 22, the RAM 23 and the auxiliary storage unit 24 are connected by the communication path 31, and constitute a controller of the checkout apparatus 110.

The CPU 21 acts as a central part of the controller. Based on an operating system and an application program stored in the ROM 22 and the auxiliary storage unit 24, the CPU 21 controls various functions of the checkout apparatus 110.

The ROM 22 acts as a main storage part. The ROM 22 stores the operating system and the application programs. One of the application programs is a control program for a control processing as further described later. In some cases, the ROM 22 stores data referred to by the CPU 21 in executing various controller processing functions.

The RAM 23 acts as a main memory part. The RAM 23 stores the data referred to by the CPU 21 to execute various processing. Further, the RAM 23 is used as a so-called work area for storing data temporarily used by the CPU 21 for executing various processing.

The auxiliary storage unit 24 acts as an auxiliary storage part. As the auxiliary storage unit 24, for example, an EEPROM (electric erasable programmable read-only memory), a HDD (hard disc drive), an SSD (solid state drive), or the like can be used. The auxiliary storage unit 24 stores data used by the CPU 21 to execute various processing and data generated in the processing by the CPU 21. The auxiliary storage unit 24 also stores application programs in some cases. The application programs stored in the auxiliary storage unit 24 includes a program for information processing as described later.

At the time of sale or transfer of the checkout apparatus 110, the program is typically stored in the ROM 22 or the auxiliary storage unit 24. However, in some cases, the program may be written to the auxiliary storage unit 24 in response to an instruction from any worker after the sale or transfer of the checkout apparatus 110. However, in such a case, the ROM 22 or the auxiliary storage unit 24 of the initially sold or transferred checkout apparatus 110 may store a program of a similar type to the program according to the present embodiment though being a different or earlier version such a program. Additionally, the checkout apparatus may be sold or transferred, in some instances without, a program stored therein.

When a different or earlier program version is initially provided, the subsequent program according to an embodiment can be written into the auxiliary storage unit 24 as updated program after the initial transfer. The transfer of the updated or new program can be performed by recording it in a removable recording medium such as a magnetic disk, a magneto-optical disk, an optical disk, a semiconductor memory, or the like or by communication via a network.

The fixed scanner 25 captures a commodity held in front of the scanner window 11, and then identifies the barcode attached to the commodity by image processing. Then, the fixed scanner 25 outputs information corresponding to the identified barcode to the CPU 21. The fixed scanner 25 can also use other types of well-known devices that utilize reflection of laser light to identify the barcode or other coded symbols on the commodity.

The printer 26 includes a receipt printer and a journal printer. The receipt printer issues various vouchers by printing various information on a receipt paper. Various vouchers include a receipt showing contents of a commercial transaction and a credit slip relating to a credit settlement. The voucher issued by the receipt printer is discharged from the receipt issuing port 13 to the outside of the main body 1. The journal printer prints journal data including information printed on a receipt paper by the receipt printer on a journal paper. The journal paper is retained inside the main body 1 unless a maintainer takes it out.

The change dispensing machine 27 includes a coin safe for storing coins by denomination and a bill safe for accommodating bills by denomination. The change dispensing machine 27 takes in coins put in the coin depositing tray 15, identifies the denomination, and then stores them in the coin safe by denomination. The change dispensing machine 27 takes in bills put in the bill insertion port 17, identifies the denomination, and stores them in the bill safe by denomination. In response to a dispensing instruction from the CPU 21, the change dispensing machine 27 discharges coins or bills from the coin safe or the bill safe to the change tray 16 or the bill discharge port 18. For change dispensing machine 27, any known automatic change dispensing machine can be adopted.

The credit card reader 28 reads out the data recorded in a credit card inserted by the operator into the card insertion slot 14. The credit card reader 28 corresponds to a card reading device. The credit card reader 28 discharges the credit card from the card insertion slot 14 to the outside of the main body 1 after reading. The card insertion slot 14 holds the discharged credit card with a part thereof protruding outside the main body 1.

The electronic payment reader/writer 29 has, for example, a NFC (near field communication) communication section, and reads data from a nearby electronic money card using a wireless communication method. The electronic payment reader/writer 29 also writes data by wireless communication to the electronic money card.

The communication unit 30 performs data communication via the network 200. The network 200 is, for example, a LAN (local area network). As the communication unit 30, any a well-known networking communication device can be adopted.

The storage device 120 stores dynamic image data output from the monitoring camera 20 and transmitted from the communication unit 30. The storage device 120 may store an image that has been captured by the monitoring camera 20 in which the credit card that was read by the credit card reader 28 is depicted. As the storage device 120, for example, a ready-made device known as a NAS (network attached storage) can be used without any change.

Next, operation of the checkout system 100 as described above is described.

When the checkout apparatus 110 operates in an operation mode for performing checkout on a commercial transaction, the CPU 21 executes the information processing as described below according to a program stored in the ROM 22 or the auxiliary storage unit 24. The particulars of the information processing described below are merely examples, and it is possible to appropriately use variations for achieving similar results. For example, in addition to a commercial transaction such as purchase and sale of a commodity, the following processing can also be used at the time of the checkout of another type of the transaction such as the provision of a service.

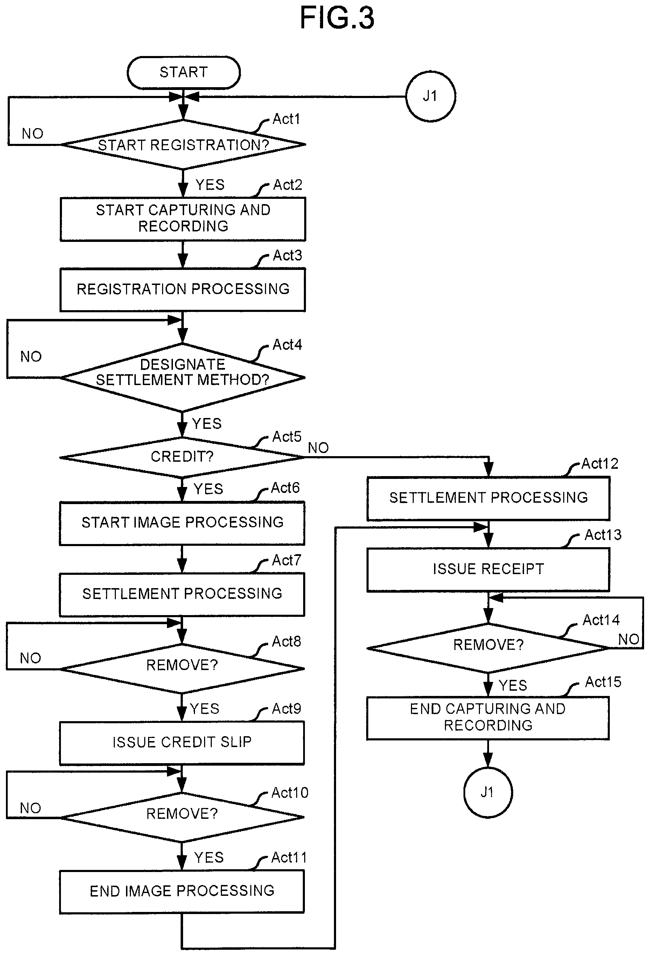

Fig. 3 is a flowchart illustrating information processing by the CPU 21.

In Act 1, the CPU 21 waits for until the registration operation is started by the operator. Then, if the operation for registration of a purchased commodity has been started, YES is determined and the CPU 21 proceeds to the processing in Act 2.

In Act 2, the CPU 21 starts capturing a monitoring image and the recording thereof. Specifically, the CPU 21 starts the operation of monitoring camera 20. The CPU 21 sends the dynamic image data, such as video data, that the monitoring camera 20 starts outputting from the communication unit 30 to the storage device 120 via the network 200 to store it. In some examples, the monitoring camera 20 may be operated at all times (continuously) and the dynamic image data over several seconds may be always buffered to a buffer built into the monitoring camera 20, the RAM 23, or the auxiliary storage unit 24. The dynamic image data buffered at the time the CPU 21 proceeds to the processing in Act 2 may also be stored in the storage device 120. In this way, it is also possible to record an image relating to the registration operation somewhat before the time at which the CPU 21 determines YES in Act 1.

In Act 3, the CPU 21 executes the registration processing for registration of the purchased commodity or commodities. The registration processing is a processing of adding a commodity code input by an operation on the touch panel 10, scanning by the hand-held scanner 12, or scanning by the fixed scanner 25 to a commodity list. The registration processing may be the same as that executed in an existing checkout apparatus. Then, in response to execution of a predetermined operation, such as a touch on a subtotal key displayed on the touch panel 10, the CPU 21 ends the registration processing and proceeds to the processing in Act 4.

In Act 4, the CPU 21 waits for until a settlement method is designated. Specifically, in this instance, the CPU 21 causes a screen including buttons to which respective settlement methods allowing use of a cash settlement, a credit settlement, an electronic money settlement and the like are allocated and displayed on the touch panel 10, and then waits until one of the buttons is touched. Then, if the settlement method has been designated by touching any one of the settlement method buttons, the CPU 21 determines YES and proceeds to the processing in Act 5 .

In Act 5, the CPU 21 checks whether or not the designated settlement method is credit settlement. Then, if the credit settlement has been designated, the CPU 21 determines YES and proceeds to the processing in Act 6.

In Act 6, the CPU 21 starts an image processing. The image processing is a changing of the dynamic image data output from the monitoring camera 20 so as to lower the resolution (image quality) of the dynamic image data. As the image processing, any well-known processing that changes the resolution of an image can be used without any change. The resolution of the processed image is determined in advance by, for example, a designer of the checkout apparatus 110 and is set such that characters displayed on the credit card captured during the recording of the settlement process are unreadable in the image data. The CPU 21 executes this image processing in parallel with the other processing shown in Fig. 3 as a separate thread processing different from the information processing shown in Fig. 3. Or such image processing may be executed by a processor different from the CPU 21. After starting the image processing, the CPU 21 stores the dynamic image data in the storage device 120 only after the image processing rather than the raw/unprocessed dynamic image data otherwise supplied from the monitoring camera 20.

In Act 7, the CPU 21 executes a processing for payment settling of the commodity registered in Act 3 using a credit card. The associated processing may be the same as that executed in an existing checkout apparatus. In the settlement processing, the credit card is inserted by the operator into the card insertion slot 14. The credit card discharged from the card insertion slot 14 is removed by the operator. In this process, the credit card may be captured in the image (s) captured by the monitoring camera 20.

In Act 8, the CPU 21 waits for the removal of the credit card discharged from the card insertion slot 14 as described above. Then, when the credit card is removed by the operator and the removal is detected by, for example, the credit card reader 28, the CPU 21 determines YES and proceeds to the processing in Act 9.

In Act 9, the CPU 21 controls the printer 26 to issue a credit slip indicating the contents of the credit settlement described above.

In Act 10, the CPU 21 waits for until the credit slip issued by the printer 26 is removed. Then, the CPU 21 determines that the credit slip has been removed by the operator, and if the removal is detected by, for example, the printer 26, the CPU 21 determines YES and proceeds to the processing in Act 11.

In Act 11, the CPU 21 ends the above-described image processing for lowering resolution. Thereafter, the CPU 21 may store the other dynamic image data output from the monitoring camera 20 in the storage device 120 without image processing of the above-described type.

The CPU 21 detects or tracks a time period from a time point at which the credit settlement is first designated to a time point at which the credit card is removed as a reading period in which the checkout apparatus 110 is in an operation state in which the credit card is being read by the credit card reader 28. Thus, by executing the information processing based on the program by the CPU 21, the controller including CPU 21 functions as a detection module. During the time period corresponding to the card reading period, the CPU 21 may execute the image processing required to render the characters displayed on the credit card to be unreadable in the dynamic image data, and controls the storage device to store this processed dynamic image data. Thus, by executing the information processing based on the program by the CPU 21, the controller having the CPU 21 as the central part functions as a processing module and a storage control module. The function as a storage module is realized by cooperation of the function of the CPU 21 as the storage control module and the storage device 120 storing the dynamic image data under the control thereof.

If the operator designates a settlement method other than the credit settlement, the CPU 21 determines NO in Act 5 and proceeds to the processing in Act 12.

In Act 12, the CPU 21 executes a processing for settling the purchased commodity registered in Act 3 according to the designated settlement method. The processing may be the same as that executed in an existing checkout apparatus.

If the processing in either Act 11 or Act 12 is executed, the CPU 21 proceeds to the processing in Act 13.

In Act 13, the CPU 21 controls the printer 26 to issue a receipt printed with a list of the purchased commodities registered in Act 3, the result of settlement, and the like.

In Act 14, the CPU 21 waits for until the receipt issued by the printer 26 is removed. Then, if the receipt is removed by the operator and the removal is detected by, for example, the printer 26, the CPU 21 determines YES and proceeds to the processing in Act 15.

In Act 15, the CPU 21 ends capturing and recording of the monitoring image. Specifically, the CPU 21 stops the monitoring camera 20. The CPU 21 notifies the storage device 120 that the storage is completed. The CPU 21 stores the dynamic image data sent to the storage device 120 as a single file from the start of recording in Act 2 to the end of recording in Act 15 in the storage device 120. However, the dynamic image data may be also divided into a plurality of parts to be stored in the storage device 120 as a plurality of files. After this, the CPU 21 returns to a standby state in Act 1 to prepare for the start of registration relating to the next transaction.

As described above, according to the checkout system 100 of the first embodiment, in a period from the start of the registering of the purchased commodity until the receipt is issued and removed at the end of the checkout process, images captured by the monitoring camera 20 are recorded and then stored. However, within this recording period, from the designation of the credit settlement to the removal of the credit slip, only an image obtained by lowering the imaging resolution to the extent required to render the characters displayed on the credit card captured in the image data to be unreadable is stored. Thus, if the operator inserts the credit card into the card insertion slot 14 after designating the credit settlement method, only an image thereof with the resolution lowered is recorded. If the operator removes the credit card after the settlement has ended after the credit slip, an image with its resolution lowered is recorded. Therefore, when the credit card is captured during settlement processing by the monitoring camera 20, only an image with the resolution lowered is recorded. For this reason, information showing the characters on the credit card cannot read from the recorded image(s) .

According to the checkout system 100, by executing the image processing for lowering the resolution over a limited time period as described above, high-quality images making full use of the performance of the monitoring camera 20 can be recorded in other time periods. Therefore, it is possible to confirm the state of the operation in detail during the other time periods.

By using technologies described in Japanese Unexamined Patent Application Publication No. 2011-39983 or Japanese Unexamined Patent Application Publication No. 2010-28265, it is possible to execute a masking processing on the credit card's image region to obscure or prevent the information indicated by the characters displayed on the credit card from being read from the recorded image. However, it is then necessary to execute a processing for recognizing the credit card in all the images captured during image recording. Compared with such intensive processing, a burden on the CPU 21 can be reduced according to the checkout system 100.

### (Second Embodiment)

The hardware of the checkout system 100 may be substantially the same in the first embodiment and in the second embodiment, with the difference in the checkout apparatus 110 between the first embodiment and the second embodiment being the content of a program stored in the ROM 22 or the auxiliary storage unit 24. Therefore, the content of the information processing executed by the CPU 21 based on the program is different between the first embodiment and the second embodiment.

In the second embodiment, a management table is stored in the auxiliary storage unit 24 for the information processing by the CPU 21.

The management table is an aggregate of data records corresponding to individual files of dynamic images stored by the storage device 120, and is used by the CPU 21 to manage the corresponding files.

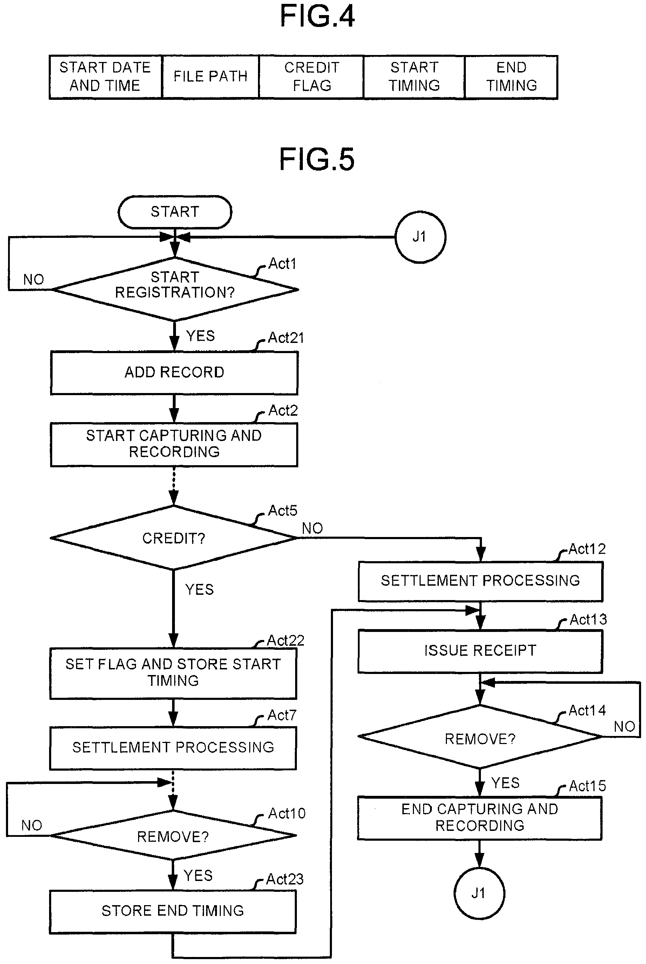

Fig. 4 is a diagram schematically illustrating the structure of a data record in the management table.

As shown in Fig. 4, the data record includes fields of start date and time, file path, credit flag, start timing and end timing. In the start date and time field, date and time at which recording of the dynamic image data is started is provided. In the file path field, a path for identifying the file of the dynamic image in the storage device 120 is provided. In the credit flag field, a flag value indicating whether or not the dynamic image data included in the file was captured accompanying a credit settlement-type is provided. Here, it is assumed that the credit flag is set to a positive value if the dynamic image data contained in the file was captured during a checkout accompanying a credit settlement. In the start timing field, time information indicating the timing at which a processing relating to the credit settlement was started is provided. In the end timing field, time information for identifying a timing at which the processing relating to the credit settlement was ended is provided. For the time information described in the fields of the start timing and the end timing, for example, information indicating an elapsed time from the beginning of the dynamic image can be used.

Fig. 5 is a flowchart illustrating a part of the information processing by the CPU 21 in the second embodiment. In the operation shown in Fig. 5, the same reference numerals are used to denote the same operations as those described in conjunction with Fig. 3, and further description thereof may be omitted.

In the second embodiment, if the operation for registering the purchased commodity is started, the CPU 21 determines YES in Act 1 and proceeds to the processing in Act 21.

In Act 21, the CPU 21 adds a new data record to the management table (see FIG. 4). In the data record, the CPU 21 describes the current date and time in the start date and time field. The CPU 21 sets a path of the file including the dynamic image data to be recorded and describes it in the file path field. The CPU 21 sets the credit flag to an unset state. The CPU 21 does not presently set any valid information in each of the start timing field and the end timing field. Thus, the date and time described in the start date and time field is used for identifying a transaction since it is the date and time at which the registration of the purchased commodity relating to one transaction was started. Instead of or in addition to describing the start date and time in the data record, other information for identifying a transaction, such as a transaction number, may be provided in the data record.

After this, the CPU 21 executes the processing in Act 2 - Act 5 in the same manner as in the first embodiment. In Fig. 5, however, specific illustration of Act 3 and Act 4 is omitted from the depiction as indicated by the dashed arrow between Act 2 and Act 5. If credit settlement is designated, the CPU 21 determines YES in Act 5 and proceeds to the processing in Act 22.

In Act 22, the CPU 21 changes the credit flag in the data record added in Act 21 to a set (positive value) state. The CPU 21 also writes the time information indicating the elapsed time from the beginning of the dynamic image data being recorded to the start timing field in the data record added in Act 21.

After this, the CPU 21 executes the processing in Act 7 - Act 10 in the same manner as in the first embodiment. In Fig. 5, however, specific illustration of Act 8 and Act 9 is omitted as indicated by the dashed arrow between Act 7 and Act 10. Then, if the credit slip issued by the printer 26 is removed, the CPU 21 determines YES in Act 10 and proceeds to the processing in Act 23.

In Act 23, the CPU 21 writes the time information indicating the elapsed time from the beginning of the dynamic image data being recorded in the end timing field in the data record added in Act 21.

Through the above processing, the CPU 21 manages whether or not the image stored by the storage device 120 is captured by detecting that it was during in the card reading period by using the management table. Thus, by executing the information processing based on the program by the CPU 21, the controller having the CPU 21 as the central part functions as a management module.

The CPU 21 executes the processing in Act 12 - Act 15 in the same manner as in the first embodiment.

As described above, in the second embodiment, the CPU 21 does not execute the image processing during the recording of the dynamic image data but rather stores the (unprocessed) dynamic image data obtained from the monitoring camera 20 for all time periods in the storage device 120. Then, for the data record(s) relating to the dynamic image data recorded during the performance the credit settlement processing, the CPU 21 sets the credit flag to the set state and furthermore records the start timing and the end timing for the credit settlement processing.

Thus, if or when the operation mode of the checkout apparatus 110 is set to a reproduction mode for confirming transaction aspects in the recorded image(s), the CPU 21 executes the following information processing based on the program stored in the ROM 22 or the auxiliary storage unit 24.

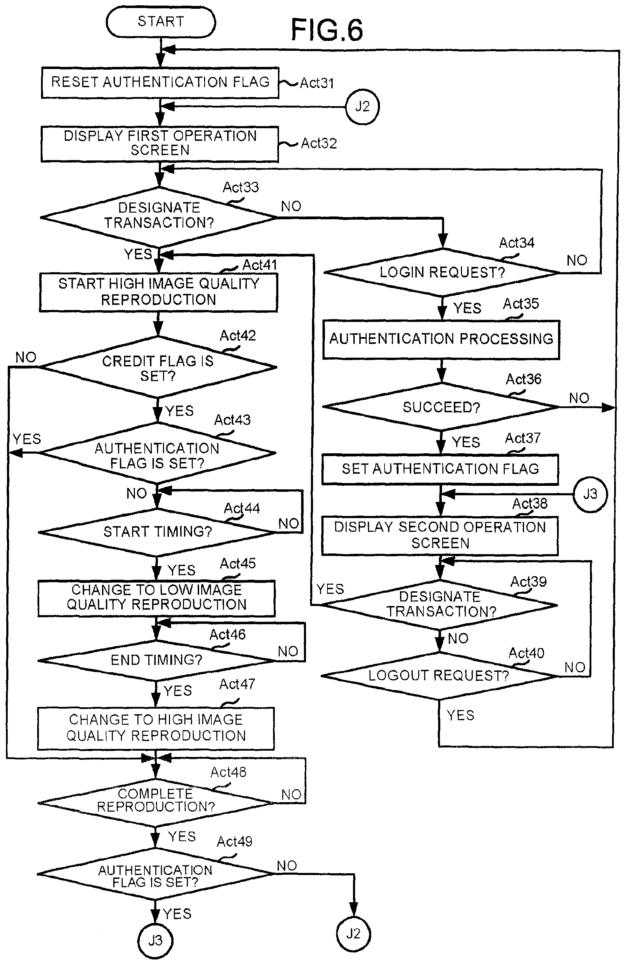

Fig. 6 is a flowchart illustrating the information processing by the CPU 21 in the reproduction mode.

In Act 31, the CPU 21 resets an authentication flag. For example, the CPU 21 manages the state of the authentication flag with 1-bit data stored in the RAM 23.

In Act 32, the CPU 21 displays a first operation screen on the touch panel 10. The first operation screen is used for receiving an operation for designating one of transactions for which an image has been recorded in the storage device 120. As an example, the CPU 21 includes a list of the dates and times as described in the start date and time fields of respective data records contained in the management table in the first operation screen. The first operation screen also contains a login button for the operator to request login.

In Act 33, the CPU 21 confirms whether or not an operation for designating a transaction has been performed on the first operation screen. Then, if the operation is not performed, the CPU 21 determines NO and proceeds to the processing in Act 34.

In Act 34, the CPU 21 confirms whether or not an operation for requesting login has been performed on the first operation screen. Then, if there is no touch on a login button, the CPU 21 determines NO and returns to the processing in Act 33.

Thus, in Act 33 and Act 34, the CPU 21 waits for until a transaction is designated or the login is requested.

The operator who desires to log in touches the login button on the first operation screen. Then, the CPU 21 determines YES in Act 34 and proceeds to the processing in Act 35.

In Act 35, the CPU 21 executes an authentication processing. As the authentication processing, a well-known processing for confirming whether or not the operator has a specific authority for the operation can be used without any change. Thus, by executing the information processing based on the program by the CPU 21, the controller having the CPU 21 as the central part functions as an authentication module.

In Act 36, the CPU 21 confirms whether or not the authentication in Act 35 is successful. If the authentication fails, the CPU 21 determines NO and repeats the processing subsequent to Act 31 in the same way as stated above. At this time, the CPU 21 may execute an operation for notifying the operator that authentication fails. On the other hand, if the authentication in Act 35 is successful, the CPU 21 determines YES in Act 36 and proceeds to the processing in Act 37.

In Act 37, the CPU 21 sets the authentication flag.

In Act 38, the CPU 21 displays a second operation screen on the touch panel 10. The second operation screen is used for receiving an operation for selecting one of the transactions for which an image has been recorded in the storage device 120, which is similar to the first operation screen. However, the second operation screen includes a logout button for the operator to request logout instead of the login button.

In Act 39, the CPU 21 confirms whether or not an operation for designating the transaction has been performed on the second operation screen. If the operation is not performed, the CPU 21 determines NO and proceeds to the processing in Act 40.

In Act 40, the CPU 21 confirms whether or not an operation for requesting logout is performed on the second operation screen. If the logout button is not touched, the CPU 21 determines NO and returns to the processing in Act 39.

Thus, in Act 39 and Act 40, the CPU 21 waits for until the transaction is designated or the logout is requested.

The operator who desires to log out touches the logout button on the second operation screen. Then, the CPU 21 determines YES in Act 40 and returns to the processing in Act 31.

If the operator wants to confirm the recorded image relating to a certain transaction, the operator performs an operation to designate the corresponding transaction on the first operation screen or the second operation screen. Specifically, the operator selects a date and time indicating the start of the transaction whose image it is desired to be confirmed from a list displayed on the first operation screen or the second operation screen, and designates the transaction with the touch panel 10. Then, the CPU 21 determines YES in Act 33 or Act 39, and proceeds to the processing in Act 41.

In Act 41, the CPU 21 starts high image quality reproduction of the dynamic image recorded relating to the designated transaction. Specifically, the CPU 21 selects a data record (hereinafter, referred to as the designated record) in which the designated date and time is described in the start date and time field of the management table. Then, the CPU 21 reads out a file specified by a path described in the file path field of the corresponding data record from the storage device 120. Further, the CPU 21 begins display of the dynamic image indicated by the dynamic image data contained in the file on the touch panel 10 without lowering the resolution.

In Act 42, the CPU 21 confirms whether or not the credit flag contained in the designated record is in the set state. If the corresponding credit flag is in the set state, the CPU 21 determines YES and proceeds to the processing in Act 43.

In Act 43, the CPU 21 confirms whether or not the authentication flag is in the set state. If the authentication flag is not in the set state, the CPU 21 determines NO and proceeds to the processing in Act 44.

In Act 44, the CPU 21 waits until a reproduction position of the dynamic image being reproduced becomes the time indicated by time information described in the start timing field of the designated record. When the reproduction position becomes this time, the CPU 21 determines YES and proceeds to the processing in Act 45.

In Act 45, the CPU 21 changes the dynamic image reproduction to low image quality reproduction. Specifically, the CPU 21 displays the dynamic image indicated by the dynamic image data on the touch panel 10 after lowering the output resolution thereof. The lowered resolution can be preset, for example, by the designer of the checkout apparatus 110 to the extent necessary that the characters displayed on the credit card captured in the image becomes unreadable. Thus, by executing the information processing based on the program by the CPU 21, the controller having the CPU 21 as the central part functions as a processing module.

In Act 46, the CPU 21 waits for a reproduction position of the dynamic image being reproduced to become a time indicated by time information described in the end timing field of the designated record. When the reproduction position becomes this end time, the CPU 21 determines YES and proceeds to the processing in Act 47.

In Act 47, the CPU 21 returns the dynamic image reproduction to high image quality reproduction.

In Act 48, the CPU 21 waits until the reproduction of the dynamic image is completed. In a case in which the credit flag is in the reset state and NO is determined in Act 42, and in a case in which the authentication flag is in the set state and YES is determined in Act 43, the CPU 21 passes the processing in Act 44 - Act 47, and directly proceeds to the standby state in Act 48. If the reproduction of the dynamic image is completed, the CPU 21 determines YES in Act 48, and proceeds to the processing in Act 49. Thus, by executing the information processing based on the program by the CPU 21, the controller having the CPU 21 as the central part carries out a processing of providing a requester with the image stored by the storage device 120 through reproduction, and functions as a supply processing module.

In Act 49, the CPU 21 confirms whether or not the authentication flag is in the set state. If the authentication flag is in the reset state, the CPU 21 determines NO and returns to the processing in Act 32. If the authentication flag is in the set state, the CPU 21 determines YES and returns to the processing in Act 38. If in the logout state, the CPU 21 displays the first operation screen again and then returns to the standby state in Act 33 and Act 34. If in the login state, the CPU 21 displays the second operation screen again and then returns to the standby state in Act 39 and Act 40.

Thus, in the checkout system 100 of the second embodiment, the dynamic image captured by the monitoring camera 20 is recorded with the characters displayed on the captured credit card kept in a readable state. In the checkout apparatus 110, in a case of reproducing the recorded dynamic image, only in the time period from the designation of the credit settlement to the removal of the credit slip is reproduced with a resolution that has been lowered to the extent necessary to make the characters displayed on the credit card unreadable. In this manner, the information indicated by characters on the credit card cannot be read from the reproduced dynamic image.

In the checkout apparatus 110 of the second embodiment, reproduction as the dynamic image with the resolution lowered is performed only if the logout state is set, and if the login state is set, the recorded dynamic image is reproduced as the dynamic image without lowering the resolution. For this reason, it is possible to confirm the operation condition in full detail based on a dynamic image at high resolution only for an authorized person who can successfully perform login.

In the checkout apparatus 110 of the second embodiment, the processing for lowering the resolution is performed only in a period from the designation of the credit settlement to the removal of the credit slip, and thus, similarly to the first embodiment, a burden on the CPU 21 can be reduced.

In this embodiment, the following various modifications can be carried out.

As the process for making the characters displayed on the credit card unreadable, for example, other processing methods such as substitution with a prepared dummy image may be used. The above-described process may be executed only on a captured range of the credit card by applying the technologies known from Japanese Unexamined Patent Application Publication No. 2011-39983 and Japanese Unexamined Patent Application Publication No. 2010-28265. By performing a processing for that process only for the period as in the first embodiment or the second embodiment, the burden on the CPU 21 can be reduced as compared with a case of simply applying the technologies disclosed in Japanese Unexamined Patent Application Publication No. 2011-39983 and Japanese Unexamined Patent Application Publication No. 2010-28265.

Further, in the above process, the entire range of the image may be the object or a preset part of the range except the range where the credit card is hardly captured may be the object.

In each of the aforementioned embodiments, the CPU 21 detects the period from the designation of the credit settlement to the removal of the credit slip as the reading period in which the checkout apparatus 110 is in the operation state for reading the credit card by the credit card reader 28. However, which period the CPU 21 sets as the reading period may be arbitrarily determined, for example, by the designer of the checkout apparatus 110. For example, the timing at which the CPU 21 enters the standby state in Act 4 may be used as a start timing of the reading period. For example, a time point at which the issuance of the credit slip is completed may be an end timing of the reading period. For example, a time point at which a predetermined time elapses for a time point at which the credit card is discharged from the credit card reader 28 may be used as the end timing of the reading period.

The dynamic image data may be stored in the auxiliary storage unit 24. Alternatively, a storage device for storing the dynamic image data may be provided inside the checkout apparatus 110 and the dynamic image data may be stored in this storage device.

The storage and management of the dynamic image data may be performed at a server apparatus connected to the network 200. In this case, the information processing shown in Fig. 6 may be performed at the server device.

It is also possible to implement a form of the disclosed embodiments in which the recording apparatus is realized separated from the checkout apparatus 110 and is then attached to the checkout apparatus 110. The monitoring camera 20 is not necessarily provided integral to the checkout apparatus 110 or the recording apparatus but may record images captured by a camera attached to a ceiling or a wall of a retail shop, for example.

The storage device 120 may be configured to store images captured by a plurality of the checkout apparatuses 110. In this case, however, it is preferable that the stored images are managed in association with identification information for separately identifying each of the checkout apparatuses 110 so that the one of the checkout apparatuses 110 that captures each image can be determined.

Each embodiment described above can also be applied to a checkout apparatus of a face-to-face type or a semi-self type checkout apparatus other than a pure self checkout type.

In the second embodiment, the recorded image may be reproduced by an information processing apparatus different from the checkout apparatus 110. In this case, this other information processing apparatus may execute substantially the same processing as that executed by the CPU 21 by referring to the management table stored in the auxiliary storage unit 24 of the checkout apparatus 110. The CPU 21 may write the management table to the storage device 120, and thus, the information processing apparatus described above refers to such a stored management table in its processing.

In the second embodiment, a recorded image may be provided to the requester by a method other than visual reproduction, such as output of the dynamic image data to another device or a storage medium. In this case, for the dynamic image data in which the credit flag is in the set state (and sufficient user authorization has not been received), the CPU 21 outputs data that is obtained by replacing a portion of the image data corresponding to a period pf the credit settlement processing with the data having its resolution lowered.

A part or all of the functions realized by the CPU 21 through the information processing can be realized by hardware for executing the information processing which is not based on a program such as a logic circuit or the like. Each of the above-described functions can also be realized by combining software control with the hardware such as the above logic circuit.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A recording apparatus, comprising:
a detector configured to detect that a credit card reading device of a settlement apparatus is in an operation state for reading a credit card;
an image processor configured to process image data captured by an image capturing device positioned to capture an image of the settlement apparatus during the operation state for reading the credit card, the image processor being configured to obscure a portion of the image data including the image of the settlement apparatus captured during the operation state for reading the credit card such that characters on the credit card are unreadable when the image is reproduced, wherein image data including images of the settlement captured during operating states of the settlement apparatus other than the operating state for reading the credit card are not processed by the image processor to obscure any portion of the image data; and
a non-volatile storage device configured to store the image data captured by the image capturing device.

2. The recording apparatus according to claim 1, wherein the portion of the image data is stored in the non-volatile storage device after the portion has been obscured by the image processor.

3. The recording apparatus according to claim 1 or 2, wherein the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during reproduction of the image data from the non-volatile storage device by reference to the time pointer.

4. The recording apparatus according to any one of claims 1 to 3, further comprising:
a user authentication system by which a user may establish authorization to reproduce the image data from the non-volatile storage device.

5. The recording apparatus according to claim 4, wherein the image data is stored in the non-volatile storage device prior to image processing by the image processor to obscure the portion of the image data, and the image data is stored in the non-volatile storage device in association with a time pointer corresponding the operation state for reading of the credit card as detected by the detector, and the image processor is configured to obscure the portion of the image data during the reproduction of the image data from the non-volatile storage device by reference to the time pointer in the absence of sufficient authorization established by the user authentication system.

6. The recording apparatus according to any one of claims 1 to 5, wherein obscuring the portion comprises reducing resolution of the image data.

7. The recording apparatus according to any one of claims 1 to 6, wherein obscuring the portion comprises replacement of the portion with a filler image.

8. The recording apparatus according to any one of claims 1 to 7, wherein the image capturing device is a camera disposed on the settlement device.

9. The recording apparatus according to any one of claims 1 to 8, wherein the image processor is in the settlement apparatus.

10. The recording apparatus according to any one of claims 1 to 9, wherein the image processor is in a store server connected to the settlement apparatus.

11. A settlement apparatus, comprising:
a display screen including a touchscreen by which a user can input a selection of a payment method for settlement of a sales transaction;
a credit card reading device by which the user can settle the sales transaction using a credit card;
a recording apparatus according to any one of claims 1 to 10,
an image capturing device positioned to capture image data of the display screen, the captured image data including an image of the display screen during the operation state for reading the credit card.

12. A method of recording images of a sales transaction settlement process on a settlement apparatus, comprising:
obtaining images of a settlement apparatus during a settlement process of a user of the settlement apparatus;
detecting whether a credit card reading device of the settlement apparatus has been placed in an operation state for reading a credit card; and
using an image processor to obscure a portion of the images of the settlement apparatus during the settlement process corresponding to a time period for which the credit card reading device was detected to be in the operation state for reading the credit card such that characters on the credit card are unreadable when the portion of images of the settlement apparatus is reproduced.

13. The method according to claim 12, further comprising:
storing the portion of the images of the settlement apparatus in a non-volatile storage device after the obscuring using the image processor.
